# EUROPEAN PATENT APPLICATION

(11) **EP 4 250 195 A1**
(43) Date of publication of application: **27.09.2023**
(21) Application number: 23305316.4
(22) Date of filing: 09.03.2023
(51) Int. Cl.: G06Q 10/02, G06Q 40/04

(54) **METHOD AND SYSTEM FOR LOW-IMPACT TRANSFER OF PROVIDER- DEPENDENT ITEMS**

(30) Priority: 23.03.2022 US 202217702577
(71) Applicant: Amadeus S.A.S., 06410 Biot (FR)
(72) Inventor: DEMAZEAU, Michel, 06200 Nice (FR); BONAUD, Jacques, 06410 BIOT (FR); PERRET, Jean-Philippe, 83440 Callian (FR); SALIBBA, Marco, 06560 Valbonne (FR); RADIGOIS, Emeline, 06560 Valbonne (FR)
(74) Representative: Samson & Partner Patentanwälte mbB

(57) **Abstract**

A method includes: maintaining, for a pool of items, an available quantity indicator; selecting a transferrable quantity associated with the pool of items; updating the available quantity indicator according to the transferrable quantity; obtaining a set of unique item identifiers equal in number to the transferrable quantity; publishing a set of transferrable item definitions equal in number to the transferrable quantity, each transferrable item definition including (i) a respective unique identifier, (ii) a cost, and (iii) an expiry time; receiving, prior to the expiry time, a conversion request including a unique identifier from a published transferrable item definition; and responsive to authentication of the conversion request, receiving purchaser identification data associated with the conversion request, and generating a purchase record corresponding to an item from the pool, the purchase record linking the purchaser identification data with the item.

## Description

### FIELD

The specification relates generally to computing methods and systems, and specifically to methods and systems for mitigating the impact on provider computing systems associated with transfer of provider-dependent items.

### BACKGROUND

The use of certain items, such as tickets providing access to venues, vehicles, or the like, is dependent on provider entities other than the holder of the item. In the case of an airline ticket, for example, use of the ticket (i.e., travel on the corresponding flight) is dependent on an airline operating an aircraft and related computing and other systems to manage such operation. These items may therefore be referred to as provider-dependent items. A provider-independent item, in contrast, can typically be used, consumed, or the like, under the control of the holder of the provider-independent item alone. For example, the holder (e.g., the owner) of an item of apparel may generally use that item of apparel independently of the provider from which the apparel was purchased.

While provider-independent items such as the item of apparel mentioned above may be readily transferred to other holders, the transfer of a provider-dependent item is complicated, or in some cases rendered impossible, by the very dependency of the item's use on the item's provider. In the case of an airline ticket as noted above, for example, use of the ticket may be require (i.e., may be dependent) on identifying information for a specific traveler who holds the ticket being stored in a computing system maintained by the airline. In some systems, such information cannot be updated, and transferring the ticket is therefore impossible. Further, even when updating such identifying information is possible, such updates may impose a substantial computational burden on the above computing system, e.g., to propagate updated information to various databases and/or other components of the system. As will be apparent, each successive transfer of the ticket to a further holder imposes such a burden on the system.

### SUMMARY

An aspect of the specification provides a method, comprising: maintaining, for a pool of items, an available quantity indicator; selecting a transferrable quantity associated with the pool of items; updating the available quantity indicator according to the transferrable quantity; obtaining a set of unique item identifiers equal in number to the transferrable quantity; publishing a set of transferrable item definitions equal in number to the transferrable quantity, each transferrable item definition including (i) a respective unique identifier, (ii) a cost, and (iii) an expiry time; receiving, prior to the expiry time, a conversion request including a unique identifier from a published transferrable item definition; and responsive to authentication of the conversion request, receiving purchaser identification data associated with the conversion request, and generating a purchase record corresponding to an item from the pool, the purchase record linking the purchaser identification data with the item.

Another aspect of the specification provides a computing device comprising:
a memory storing, for a pool of items, an available quantity indicator;
a communications interface; and
a processor configured to:
   select a transferrable quantity associated with the pool of items;
   update the available quantity indicator according to the transferrable quantity;
   obtain a set of unique item identifiers equal in number to the transferrable quantity;
   publish a set of transferrable item definitions equal in number to the transferrable quantity, each transferrable item definition including (i) a respective unique identifier, (ii) a cost, and (iii) an expiry time;
   receive, prior to the expiry time, a conversion request including a unique identifier from a published transferrable item definition; and
   responsive to authentication of the conversion request, receive purchaser identification data associated with the conversion request, and generating a purchase record corresponding to an item from the pool, the purchase record linking the purchaser identification data with the item.

According to some embodiments of these aspects:
- the items are passenger spaces on a vehicle
- updating the available quantity indicator includes incrementing an allotment value stored in association with the pool of items according to the transferrable quantity
- it further comprises selecting auxiliary attributes for each unique identifier, and publishing the auxiliary attributes with respective ones of the transferrable item definitions
- publishing the transferrable item definitions includes generating respective transaction records for each transferrable item definition, and submitting the transaction records to a distributed ledger
- it further comprises prior to the publishing, generating a distributed ledger specific to the pool of items; and following the expiry time, discarding the distributed ledger.
- it further comprises receiving a payment corresponding to the unique identifier, prior to the conversion request.
- it further comprises receiving the payment in association with a first client identifier; receiving the conversion request from a second client identifier; and
   wherein authenticating the conversion request includes verifying that the second client identifier acquired the transferrable item definition
- obtaining the unique identifiers includes generating the unique identifiers based on a provider identifier.
- it further comprises further comprises detecting a change associated with the pool of items; and generating an update notification associated with at least one of the transferrable item definitions.

### BRIEF DESCRIPTIONS OF THE DRAWINGS

Embodiments are described with reference to the following figures, in which:
FIG. 1 is a diagram of a system for coordinating the transfer and delivery of provider-dependent items.
FIG. 2 is a diagram of certain internal components of the provider subsystem of FIG. 1.
FIG. 3 is a flowchart of a method for transferring and converting provider-dependent items.
FIG. 4 is a diagram illustrating an example performance of block 310 of the method of FIG. 3.
FIG. 5 is a diagram illustrating an example performance of block 320 of the method of FIG. 3.
FIG. 6 is a diagram illustrating an example performance of block 330 of the method of FIG. 3.
FIG. 7 is a diagram illustrating a further transfer of a transferrable item definition in the system of FIG. 1.
FIG. 8 is a diagram illustrating an example performance of blocks 350 and 355 of the method of FIG. 3.

### DETAILED DESCRIPTION

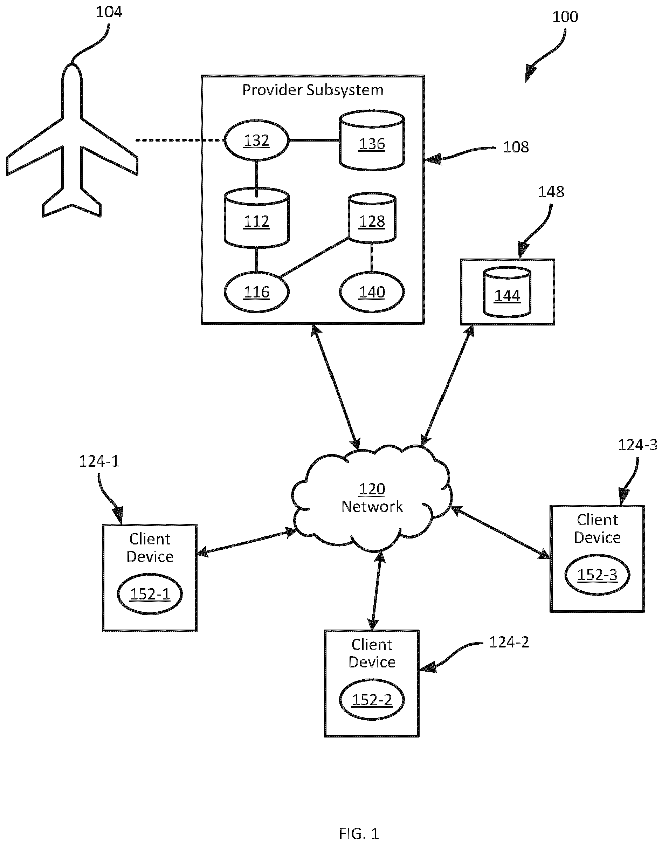

FIG. 1 depicts a system 100 for coordinating the transfer and delivery of provider-dependent items. A provider-dependent item, in general, is an item (e.g., any suitable good or service) whose use by the holder (e.g., owner) of that item requires the involvement of the item's provider. In other words, purchase of a provider-dependent item does not enable the purchaser to then make use of the item independently of the provider. Examples of provider-dependent items include flight tickets, e.g., which grant access to a particular aircraft 104, at a particular time and with a particular origin and destination location. As will be apparent, the purchase of a flight ticket does not enable the ticket holder to travel from the above-mentioned origin location, to the destination location, at the relevant time, without involvement of the entity operating the aircraft 104 (typically, an airline). That entity, referred to as the supplier or provider entity, retains control of the physical assets employed to deliver the goods and/or services to which the flight ticket grants access. Although the handling of provider-dependent items in the form flight tickets is described herein, the systems and methods set out below can be applied to a wide variety of other provider-dependent items instead of, or in addition to, flight tickets. Examples of such provider-dependent items include other travel-related goods and services, such as hotel reservations, vehicle rentals, and the like.

The system 100 includes a provider subsystem 108, e.g., operated by or on behalf of the above-mentioned provider entity, including various computing components enabling the deployment of assets such as the aircraft 104, as well as the sale of tickets granting access to the aircraft 104.

In particular, the provider subsystem 108 includes a reservation repository 112 containing a variety of data defining provider-dependent items such as flight tickets, and related data. For example, the repository 112 can include records defining scheduling information for flights operated by the provider, using the aircraft 104 and/or other aircraft. The repository 112 can also include pricing data for the above-mentioned flights. Further, the repository 112 can include purchase records defining any issued tickets for a given flight operated using the aircraft 104. A purchase record, i.e., a ticket, includes or is otherwise associated with identifying information for the holder of that ticket. The identifying information can be stored, for example, in a passenger name record (PNR) or the like, as will be apparent to those skilled in the art. The identifying information can include a name, residence information (e.g., an address of residence), a travel document identifier such as a passport number, and the like.

Purchase records can be created in the repository 112 by a reservation application 116 of the provider subsystem 108. The reservation application 116 (which may also be referred to as a central reservation system, or CRS) can be executed, for example, by one or more servers or other suitable computing hardware deployed within the provider subsystem 108. The reservation application 116 can implement or otherwise interconnect with computing infrastructure to implement a website and/or other distribution channels enabling travelers or other entities acting on behalf of such travelers to purchase flight tickets (leading to the creation of purchase records in the repository 112). For example, the provider subsystem 108 can be connected to a network 120 including any suitable combination of local and wide-area networks, to which a plurality of client devices 124-1, 124-2, and 124-3 (collectively, the client devices 124, and generically, a client device 124) are also connected. Each client device 124 can include a personal computing device such as a smart phone, tablet computer, desktop computer or the like, or a further subsystem consisting of servers or other suitable computing devices, e.g., operated by a travel agency, aggregator entity, or the like. The client devices 124, of which there may be fewer or more than the three illustrated in FIG. 1, in other examples, can exchange data with the provider subsystem 108 (e.g., the reservation application 116) via the network 120, to purchase flight tickets and thereby cause the creation of purchase records in the repository 112.

The provider subsystem 108 can also include an inventory repository 128, containing data defining flights operated by the provider entity, as well as a number of seats available (i.e., not yet associated with a purchase record) for each such flight. In some examples, the inventory repository 128 is integrated with the reservations repository 128. In this example, however, the repository 128 is illustrated separately from the reservations repository 112 for clarity. The generation of a purchase record in the repository 112 may therefore involve, among other stages, interaction between a client device 124 and the reservation application 116, and querying of the inventory repository 128 by the reservation application 116.

The provider subsystem 108 also includes, in this example, an access control application 132. The application 132 can be executed on one or more servers within the provider subsystem 108, whether the same devices as those executing the reservation application 116 or distinct devices. In the context of air travel, the application 132 may also be referred to as a departure control system (DCS). The access control application 132 implements various functions related to controlling access to the aircraft 104 for a given flight. For example, the application 132 can be configured to retrieve information from the repository 112, generate access documents (e.g., boarding passes) corresponding to purchase records from the repository 112 responsive to confirming that travelers requesting such access documents are the travelers identified in the purchase records. The application 132 may also be configured to provide traveler identifying information to regulatory entities external to the provider subsystem 108, for example. Any or all of the above data may be stored in an access control repository 136 connected with the application 132.

As will be apparent from the above discussion, the generation of a purchase record indicating that a particular individual can be granted access to the aircraft 104 at a specified time can involve the transmission, processing, and storage of data by numerous components of the provider subsystem 108. The above operations therefore impose a computational burden on the provider subsystem 108, in the form of computing time, storage capacity, network bandwidth, and the like. The above burden may render the transfer of a purchase record from one holder to another - that is, transferring the right to access the aircraft 104 from one individual to another - technically impractical, even if such a transfer is permissible under various regulatory regimes. Specifically, transferring ownership of a ticket may involve further interaction between a client device 124 and the application 116, followed by further updates to the repository 112, which in turn may trigger further computational activity by the application 132 and updates applied to the repository 136. Omitting such updates may result in an individual attempting to access the aircraft 104 presenting identifying information that does not match the repositories 112 and 136. Therefore, each transfer (e.g., if a ticket is transferred more than once) requires the same computationally intensive set of updates (again, when such updates are even permissible).

For the above reasons, many provider subsystems 108 do not implement functionality enabling the transfer of purchase records. That is, in many systems, a purchased flight ticket is permanently linked to a specific individual, and cannot enable any other individual to access the aircraft 104.

In contrast the above-mentioned systems, the system 100 includes certain components, and implements certain functionality, to enable transfer of provider-dependent items such as flight tickets. The system 100, as will be discussed below, enables transfer of provider-dependent items while mitigating the computational impact noted above that would typically result from such transfers, and involving minimal modifications to many components of the provider subsystem 108.

In particular, the provider subsystem 108 also includes a publication application 140, which may be executed by a further computing device or set of devices (e.g., one or more servers) within the provider subsystem 108. The publication application 140, in other examples, may be integrated with the reservation application 116, but is illustrated separately in FIG. 1 for clarity. The publication component 140, as will be described in greater detail below, communicates with a transferrable item ledger 144, e.g., hosted by a ledger subsystem 148 distinct from the provider subsystem 108. The ledger subsystem 148 can be operated by the same entity as the provider subsystem 108, or by a different entity, but is in any event logically distinct from the components of the provider subsystem 108 mentioned above and can therefore be operated with little or no computational impact on those components. In some examples, the ledger subsystem 148 is implemented as a distributed ledger, such that no single entity operates the ledger subsystem 148, but rather the publication application 140 and local applications at the client devices 124 collectively operate the ledger subsystem 148.

Each client device 124 executes a respective client application 152-1, 152-2, and 152-3 (collectively, the client applications 152, and generically, a client application 152). The client applications 152 can be deployed to the client devices 124 from the ledger subsystem 148 or, in some examples, from the provider subsystem 108. In general, execution of the client applications 152 by the client devices 124 enables the client devices 124 to interact with the provider subsystem 108 and the ledger subsystem 148 to purchase transferrable provider-dependent items. Further, following such purchase, the client devices 124 can transfer ownership of the transferrable items to other entities via interactions with the ledger subsystem 148, without any involvement on the part of the provider subsystem 108. The above-mentioned transferrable items can be converted, one time only, to purchase records according to the process outlined above via interaction between a client device 124 associated with the current holder of a transferrable item, and the provider subsystem 108. That is, a transferrable item can be converted to a flight ticket according to the process set out earlier, regardless of how many transfers of ownership have occurred previously to such conversion, and without the involvement of the applications 116 or 132, or the repositories 112 and 136, in such transfers.

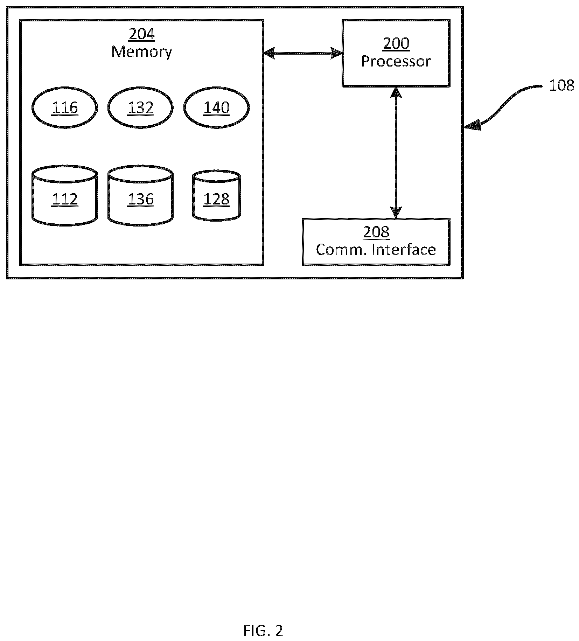

Before discussing the functionality implemented by the system 100 in greater detail, certain components of the provider subsystem 108 will be described with reference to FIG. 2. FIG. 2, in particular, illustrates an example computing infrastructure implementing the provider subsystem 108. In the illustrated example, the provider subsystem 108 includes at least one processor 200, such as a central processing unit (CPU) or the like. The processor 200 is interconnected with a memory 204, implemented as a suitable non-transitory computer-readable medium, such as a combination of volatile and non-volatile memory components (e.g., any one or more of Random Access Memory (RAM), read only memory (ROM), Electrically Erasable Programmable Read Only Memory (EEPROM), flash memory, magnetic computer storage, and the like). The processor 200 and the memory 204 are generally comprised of one or more integrated circuits (ICs).

The processor 200 is also interconnected with a communications interface 208, which enables the provider subsystem 108 to communicate with the other computing devices of the system 100 via the network 120. The communications interface 208 therefore includes any necessary components (e.g., network interface controllers (NICs), radio units, and the like) to communicate via the network 120. The specific components of the communications interface 208 are selected based on upon the nature of the network 120. The provider subsystem 108 can also include input and output devices connected to the processor 200, such as keyboards, mice, displays , and the like (not shown).

The components of the provider subsystem 108 mentioned above can be deployed in a single enclosure, or in a distributed format. In some examples, therefore, the provider subsystem 108 includes a plurality of processors, either sharing the memory 204 and communications interface 208, or each having distinct associated memories and communications interfaces.

The memory 204 stores a plurality of computer-readable programming instructions, executable by the processor 200. The instructions stored in the memory 204 include the applications 116, 132, and 140 mentioned above. The memory 204 also stores the repositories 112, 136, and 128 in this example. In other examples, any one or more of the repositories 112, 136, and 128 can be stored at a distinct computing device and accessed by the processor 200 via the communications interface 208.

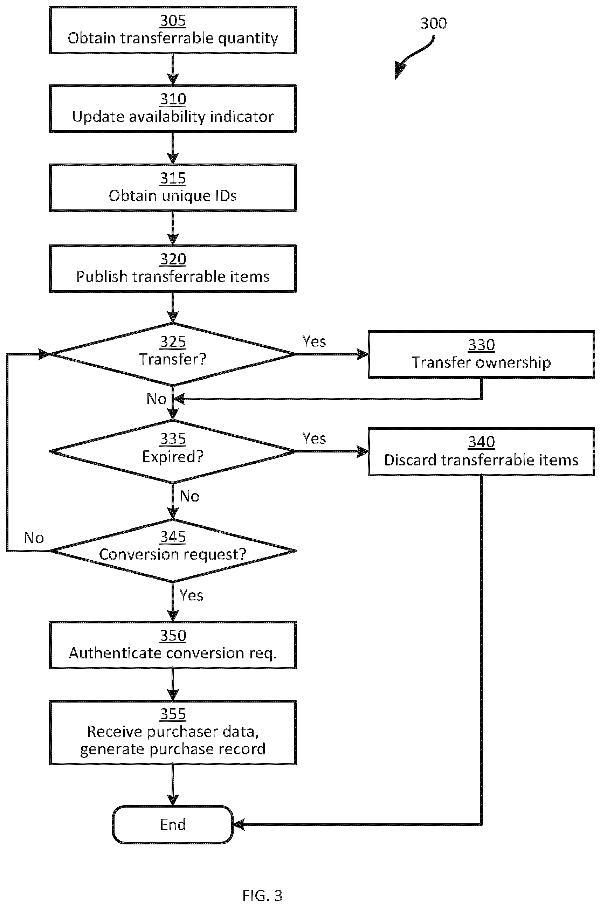

Turning to FIG. 3, a method 300 for transferring and converting provider-dependent items is illustrated. The method 300 will be described below in conjunction with its performance in the system 100, in particular by the components of the provider subsystem 108 specified below. As will be apparent to those skilled in the art, the method 300 can also be performed by various other systems than the system 100, e.g. for deploying transferrable provider-dependent items in contexts other than air travel.

At block 305, the provider subsystem 108 is configured to obtain a transferrable quantity. For example, the processor 200, via execution of the publication application 140, can receive input data (e.g., from an operator computing device coupled to the provider subsystem 108, from a local input device, or the like) defining the transferrable quantity. In the present example, the transferrable quantity represents a number of seats on a specific flight operated by the provider to be enabled for transferrable sale. By default (in the absence of block 305), all seats on a flight may be designated only for legacy sale mechanisms, in which purchase of a seat leads to the generation of a non-transferrable flight ticket as outlined earlier in connection with the reservation application 116 and the repository 112.

The transferrable quantity can represent any portion of the seats on a flight. More generally, the transferrable quantity can represent any portion (up to and including all) of a pool of provider-dependent items. The transferrable quantity can also be determined automatically, e.g. by the publication application 140 according to any suitable business logic that is beyond the scope of the present discussion. The transferrable quantity can take the form of an absolute number, or a fraction (e.g., one half of the available pool of provider-dependent items). In embodiments where the transferrable quantity is received as input data from an administrator or the like, the application 140 can be configured to host an interface (e.g., a web-based user interface or the like) enabling the receipt of input data. For instance, the application 140 can be configured to query the inventory repository 128 for a list of upcoming flights, present those flights via the above-mentioned interface, and receive input data selecting one or more flights and specifying corresponding transferrable quantities.

At block 310, in response to receiving the transferrable quantity at block 305, the application 140 is configured to update an availability indicator associated with the pool of provider-dependent items in the inventory repository 128. The repository 128 can, for example, include a count of remaining (e.g., unsold) items in the pool (e.g., seats on a flight), and/or a count representing items that are no longer available for purchase, having already been purchased or otherwise allocated to travelers. The above-mentioned count can therefore be incremented by the transferrable quantity from block 305.

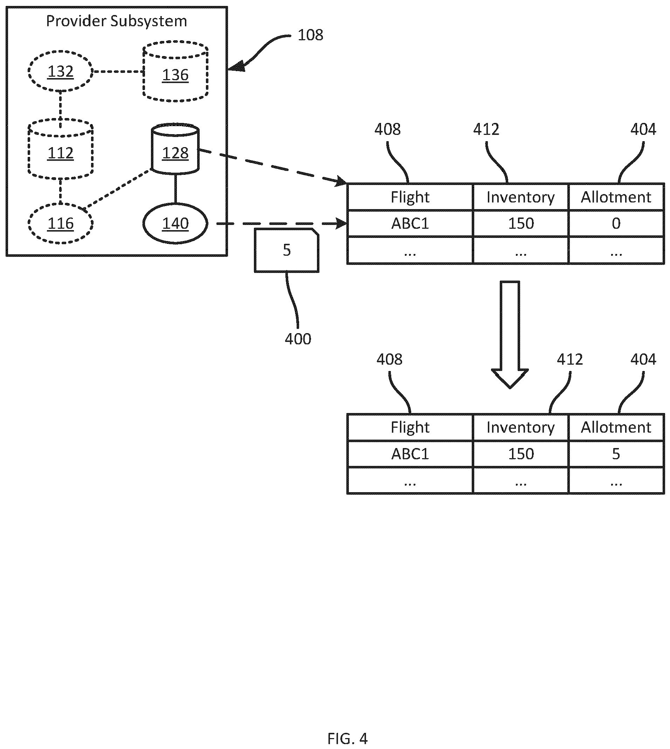

Turning to FIG. 4, the provider subsystem 108 is shown, with certain components illustrated in dashed lines to indicate that no involvement from those components is necessary at blocks 305 and 310. In particular, as noted above the application 140 obtains a transferrable quantity 400 (e.g., five, for example) at block 305, corresponding to a flight with the identifier "ABC1". At block 310, the application 140 applies the transferrable quantity 400 to the inventory repository 128, e.g., to update an allotment field 404 in the record corresponding to the above flight (e.g., as indicated by a flight identifier field 408). As a result, that record is update to indicate that, of a total of one hundred and fifty seats on the relevant flight (e.g., as indicated by a total inventory field 412), five of those seats have been sold, reserved, or otherwise made unavailable for purchase. In some examples, the inventory repository 128 may contain more than one field to track different types of unavailable seats (e.g., distinguishing between seats that correspond to complete purchase records in the repository 112, and seats that have been allocated for future purchase records, such as those represented by the transferrable quantity 400).

The available quantity indicator(s) in the repository 128, as will be apparent to those skilled in the art, can be employed by the reservation application 116 in connection with processing future ticket purchases. For example, the reservation application 116 can be configured to determine, from the "inventory" and "allotment" fields shown in FIG. 4 (or any other suitable available quantity indicators), how many seats remain purchasable for the corresponding flight, e.g., to avoid overselling the flight.

Returning to FIG. 3, at block 315 the application 140 is configured to obtain a set of unique identifiers equal in number to the transferrable quantity from block 305. Thus, in the example mentioned above, the application 140 is configured to obtain five unique identifiers, each representing one transferrable item. The identifiers obtained at block 315 are distinct from ticket numbers or other identifiers stored in the reservation repository 112, and indeed the repository 112 need not be involved in obtaining the unique identifiers at block 315, nor do such identifiers need to be stored in the repository 112.

Obtaining the identifiers at block 315 can include generating, by the application 140 itself, the identifiers in the form of random strings, hashes based on an identifier of the application 140 itself or the provider subsystem 108 more generally. For example, a private encryption key of the application 140 can be used as input for generating the identifiers at block 315. In other examples, the application 140 can request the unique identifiers from the ledger subsystem 148, which can in turn be configured to generate a set of unique identifiers and return the identifiers to the application 140. In some examples, the unique identifiers can be stored in the repository 128 once they are obtained, but storage in the repository 128 can also be omitted, as the unique identifiers will also be tracked in the ledger 144.

At block 320, the application 140 is configured to publish a set of transferrable item definitions, equal in number to the transferrable quantity 400 from block 305. Each item definition includes one of the identifiers from block 315, as well as one or more additional attributes. The application 140 is therefore configured to obtain, prior to publication, the above-mentioned attributes. The attributes include at least a cost associated with each transferrable item identifier, and an expiry time associated with each transferrable item identifier. The cost represents a price to be paid to the provider entity in order to transfer ownership of the relevant transferrable item definition to the paying entity. The cost attribute can be received as input data, e.g., from an administrator similarly to the input process described earlier in connection with the transferrable quantity itself. In other examples, the cost can be determined automatically or semiautomatically by the application 140, e.g., by querying the reservation application 116 for pricing information corresponding to the relevant flight.

The expiry time attribute indicates a time by which the transferrable item definition must be converted to a purchase record in the repository 112 in order to secure access to the aircraft 104 (or any other provider-dependent item, as will be apparent). In other words, if a conversion process, described below in greater detail, is not performed before the expiry time, the transferrable item definition becomes inert, and does not provide access to the aircraft 104. The expiry time can also be received as input as mentioned above. In other examples, the expiry time can be obtained by the application 140 by querying the access control application 132. For instance, in the context of air travel, the access control application 132 may determine a departure control window, which specifies a time period prior to the departure of a flight by which all passenger information must be finalized. Upon closure of the departure control window, for example, it may no longer be possible to create further reservations / purchase records (i.e., it may not longer be possible to sell tickets on the flight). The expiry time can therefore be set as the departure control window, e.g., in the form of a number of hours or days before the departure time of the corresponding flight.

Publication of the set of transferrable item definitions includes providing the definitions to the ledger 144. The specific mechanisms by which the item definitions are written to the ledger 144 depend on the nature of the ledger 144 and the underlying ledger subsystem 148. For example, in the case of a centrally managed ledger 144, the application 140 can be configured to establish a connection with the ledger subsystem 148, e.g., by providing account credentials or the like, and can then transmit a request to write the transferrable item definitions into the ledger 144. In other examples, in which the ledger 144 is a distributed ledger, the application 140 can generate one or more transaction records (e.g., five transaction records in this example, one for each transferrable item definition) and propagate the transaction records (e.g., blocks) to the other nodes of the distributed ledger.

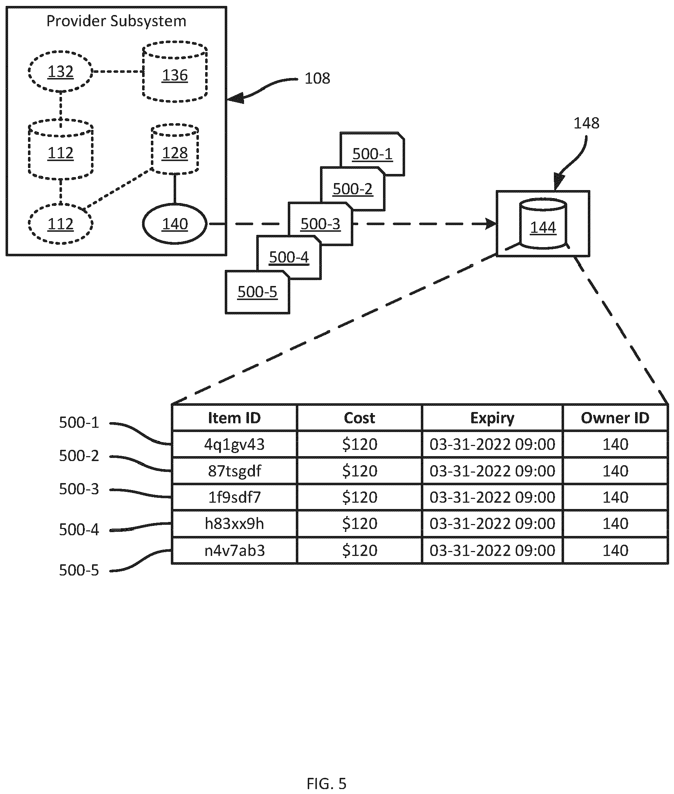

Turning to FIG. 5, an example performance of block 320 is illustrated. In particular, having obtained the unique identifiers and above-mentioned attributes, the application 140 is configured to transmit a set of transferrable item definitions 500-1, 500-2, 500-3, 500-4, and 500-4 (collectively, the transferrable item definitions 500, and generically, an transferrable item definition 500) to the ledger subsystem 148. The definitions 500 are stored in the ledger 144, as shown in the lower portion of FIG. 5. Each definition 500 is stored as a record in the ledger 144 (or alternatively, one or more blocks on a distributed ledger), including the unique identifier ("Item ID") of the transferrable item. Each definition 500 also includes a cost and an expiry time as noted earlier. In the illustrated example, the definitions 500 each have the same cost ($120) and the same expiry time (9am on March 31, 2022, which may be 24 hours before departure of the corresponding flight, for example). The definitions 500 can include various other attributes in some embodiments, examples of which will be discussed further below.

In addition, each definition 500 is associated with an owner identifier ("Owner ID") in the ledger 144. The owner identifier indicates which entity holds the right convert the relevant transferrable item definition into a purchase record, and/or to transfer the item definition to another holder. In the example shown in FIG. 5, the application 140 itself is listed as the owner of each definition 500, as the definitions 500 originated with the application and have not yet been transferred.

Returning to FIG. 3, at block 325, the provider subsystem 108 is configured to determine whether to transfer one or more of the transferrable item definitions published at block 320, or published via an earlier performance of block 320. That is, at block 325 the provider subsystem 108 is configured to determine whether to update the ownership information stored in the ledger 144 in association with any transferrable item definitions currently owned by the provider subsystem 108 itself (e.g., by the application 140).

The determination at block 325 can be performed in a wide variety of ways. For example, as noted earlier, the application 116 or an associated component of the provider subsystem 108 can host a website or other distribution mechanism enabling the client applications 152 to obtain definitions of available flights to book seats on. The reservation application 116 can therefore transmit a list of flights and/or other items to a client device in response to a search request received from the client device 124. The search request, e.g., generated via execution of the corresponding application 152, can include search parameters such as a travel date, origin and destination locations, and the like. In response to the search request, the reservation application 116 can be configured to retrieve search results from the repositories 112 and 128 and present the search results to the client device 124. In addition, the application 116 can query the application 140 for transferrable item definitions corresponding to any of the flights identified in the above-mentioned search results. The client device 124 may therefore present selectable items for purchase that include either or both of conventional tickets whose purchase results in the creation of a purchase record in the repository 112, and transferrable item definitions.

Selection of a transferrable item definition at the client device 124 can initiate a payment flow implemented by the application 116. Rather than initiate a conventional ticket-purchase process to create a purchase record in the repository 112, however, the application 116 can transmit a command to the application 140 to initiate a transfer of ownership for the selected transferrable item definition.

The determination at block 325 can therefore include a determination, at the application 140, of whether any commands to initiate such a transfer have been received, whether from the application 116 or from another source.

When the determination at block 325 is affirmative, the application 140 proceeds to block 330, and initiates a transfer of ownership of the relevant transferrable item definitions. The transfer updates the owner identifier associated with the transferrable item definition(s) to be transferred from the identifier of the application 140 itself, to another owner identifier, such as an identifier of a client application 152.

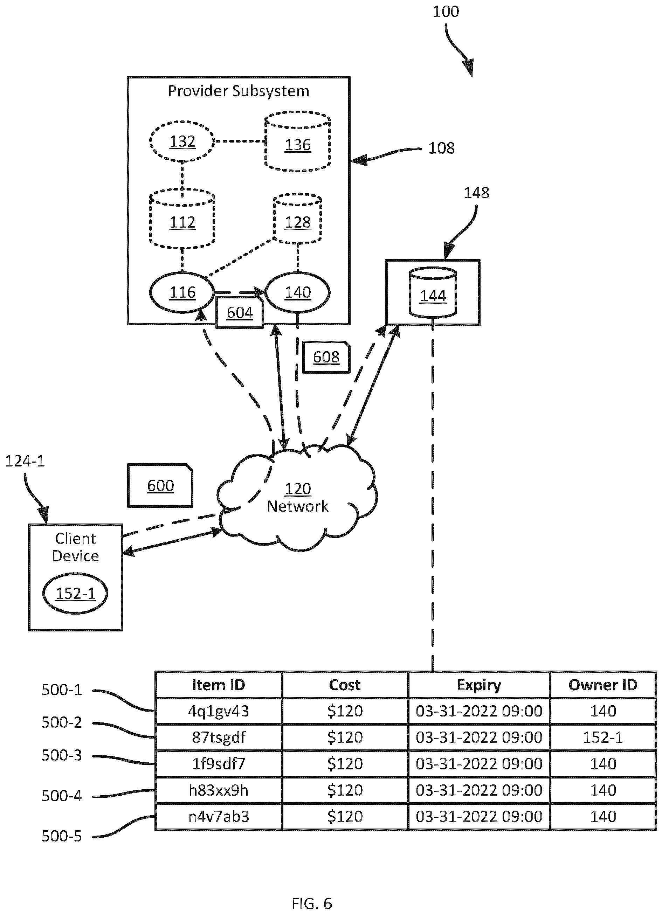

Turning to FIG. 6, an example performance of block 330 is illustrated. For example, following the search process outlined above, the client application 152-1 at the client device 124-1 is assumed to select the transferrable item definition 500-2 for purchase, and to transmit one or more messages 600 to the reservation application 116. The message(s) 600 can include, for example, the unique identifier of the definition 500-2, a unique identifier of the client application 152-1 (e.g., a public encryption key or a hash thereof, an account identifier, or the like), and payment information. The application 116, in response to receiving the message(s) and executing a payment process, can transmit a command 604 to the application 140, to transfer ownership of the definition 500-2 to the client application 152-1. The application 140, in turn, is configured to transmit a message 608 to the ledger subsystem 148 to effect the transfer. The message 608 can take the form of a request to a central service, an application of one or more transactions to a distributed ledger, or the like.

In response to the message 608, the ledger 144 is updated as shown in FIG. 6, to replace the owner identifier associated with the definition 500-2 with the identifier of the client application 152-1. The application 140 therefore no longer manages ownership of the definition 500-2. The client application 152-1 (and indeed any client application 152) can also be configured to retrieve, from the ledger 144 any item definitions currently owned by the application 152-1 itself.

In other examples, the transfer command initiating the performance of block 330 can originate at an external entity, such as a marketplace that lists transferrable item definitions from the ledger, collects payment for the purchase of such definitions, and upon completion of a payment process, transmits a command to the previous holder of the purchase transferrable item (e.g., and also transfers a portion of the payment to the entity operating the application 140). The transfer, in other words, need not be initiated by any portion of the provider subsystem 108.

Following the transfer at block 330, or following a negative determination at block 325, the provider subsystem 108 proceeds to block 335. At block 335, the application 140 can determine whether the expiry time mentioned earlier has arrived for any of the transferrable item definitions 500 in the ledger 144 (regardless of current ownership of the definitions 500). When the determination at block 335 is affirmative, the application 140 can instruct the ledger subsystem 148 to discard the expired definitions 500. The ledger subsystem 148 can also notify the relevant owners (e.g., client devices 124) of expiry and/or impending expiry of transferrable item definitions 500. In other examples, rather than notifications being generated and transmitted to the client devices 124, by the subsystem 148, the client devices 124 themselves can be configured, via execution of the applications 152, to query the subsystem 148 periodically for notifications and/or other information. For example, the client devices 124 can query the subsystem 148 for changes to definitions, for definitions associated with the relevant application 152 that are near expiry, and the like. Other notifications, such as those indicative of changes to a flight (e.g., a modified departure time), can also lead to notifications from the application 140 to the client devices 124 via the ledger subsystem 148. In other examples, the ledger subsystem 148 can implement block 340 automatically, without any involvement by the application 140.

At block 345, e.g., following a negative determination at block 335 for at least one transferrable item definition 500, the provider subsystem 108 is configured to determine whether a conversion request has been received in connection with a valid (i.e., not expired) definition 500. As will be apparent, conversion requests need not closely follow the initial transfer of a definition 500 from block 330. In fact, the transfer at block 330 can occur days, weeks, or months prior to a conversion request. Of particular note, following the transfer at block 330, the provider subsystem 108 has collected payment for the corresponding definition 500, but has not performed the processing and updating of the repositories 112 and 136 involved in generating a purchase record (e.g., a flight ticket). The applications 116 and 132 of the provider subsystem 108, in fact, need not perform any actions in connection with the transferred definition until a conversion request is received, despite the fact that the transferred definition 500 may be transferred to any number of additional entities in the meantime. Such transfers are tracked at the ledger subsystem 148, and need not involve the provider subsystem 108, thus reducing the computational impact of ownership transfers on the provider subsystem 108.

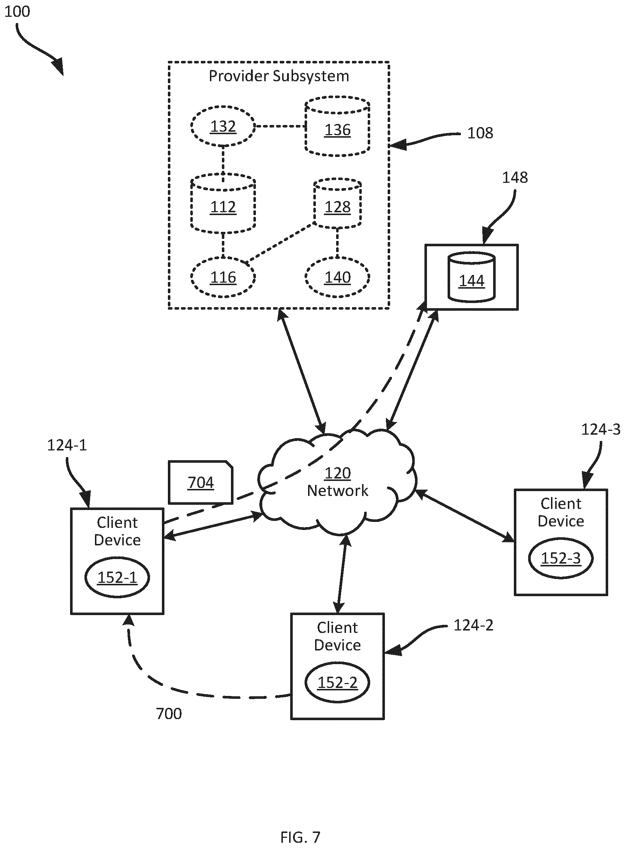

For example, turning to FIG. 7, ownership of the definition 500-2 can be transferred from the client application 152-1 to another client application 152 (e.g., the client application 152-2) after the transfer of block 330 and before a conversion request is received at block 345. For example, operators of the client devices 124-1 and 124-2 may agree on any suitable exchange parameters for transfer of the definition 500-2. Any consideration 700 provided in exchange for the transfer (e.g., monetary payment, or other consideration) can be offline, or can be mediated by a third-party computing device separate from the client devices 124, the provider subsystem 108, and the ledger 148. The client application 152-1 can generate, e.g., in response to an input from the operator of the client device 124-1, a transfer instruction 704 to the ledger subsystem 148. The transfer instruction includes an identifier of the definition 500-2, as well as an identifier of the application 152-2 (i.e., the updated owner of the definition 500-2). The instruction 704 results in the owner identifier associate with the definition 500-2 in the ledger 144 being updated from "152-1" to "152-2". As will be apparent, any number of other transfers can take place for any of the definitions 500 prior to expiry or conversion, without the involvement of the provider subsystem 108.

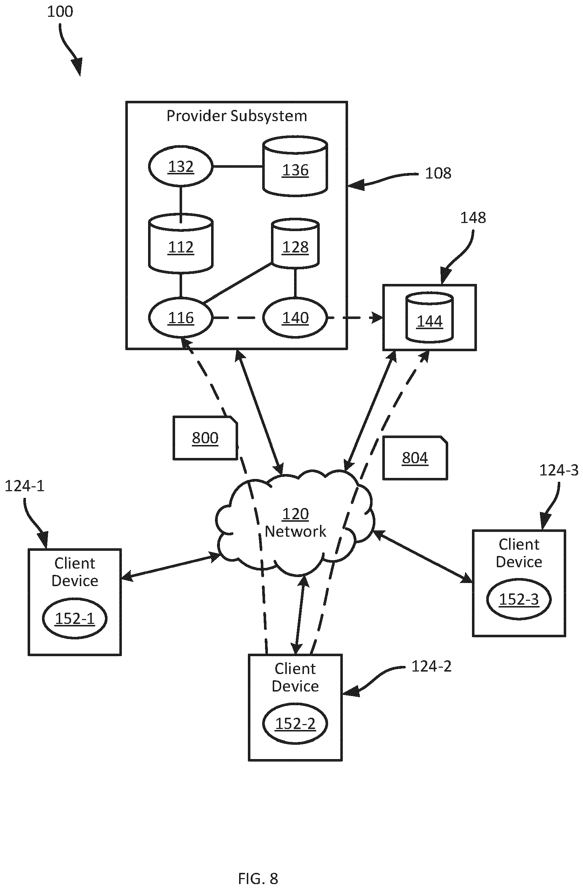

Turning to FIG. 8, at some time prior to expiry of the definition 500-2, the client device 124-2 (presuming the client application 152-2 remains the owner of the definition 500-2) can initiate a conversion request. For example, the application 152-2 can implement an application programming interface (API) or other communications protocol implemented by the reservation application 116 to complete purchases of flight tickets. The client device 124-2 therefore transmits a conversion request 800 to the application 116, e.g., including the unique identifier of the definition 500-2.

Returning briefly to FIG. 3, at block 350, in response to receiving the conversion request, the provider subsystem 108 is configured to authenticate the conversion request 800, by confirming whether the originator of the conversion request 800 is the current owner of the identified transferrable item definition 500-2. As shown in FIG. 8, the request 800 is directed to the application 116, which then queries the application 140 to authenticate the request 800. For example, the request 800 can include the unique identifiers of both the definition 500-2 itself, and of the client application 152-2. The application 140 can be configured to query the ledger 144 to confirm that the client identifier in the request 800 is in fact the current holder of the definition 500-2 identified in the request. When the request 800 aligns with the ledger 144, the application 116 proceeds to block 355. Otherwise, the application 116 denies the authentication request, and performance of the method 300 can return to block 335.

At block 355, in response to authenticating the conversion request 800, the application 116 is configured to obtain purchaser data, such as the identifying information mentioned earlier, and to generate a purchase record for storage in the repository 112. As will be apparent to those skilled in the art, the generation of the purchase record may also trigger additional processes at the application 132, e.g., to update the repository 136. Following the conversion request 800, the client application 152-2 can also be configured, in some examples, to send a final transfer request to the ledger subsystem 148, to return ownership of the definition 500-2 to the application 140, as the definition 500-2 has effectively been exchange with a flight ticket. Alternatively, the application 140 can instruct the ledger subsystem 148 to discard or otherwise inactivate the definition 500-2 in response to successful authentication of the conversion request 800.

Various additional functionality can be implemented by the system 100, in addition to that set out above. For example, in some implementations, transferrable item definitions 500 can include auxiliary attributes, obtained at block 315, prior to publication. Examples of auxiliary attributes include links from one definition 500 to another (e.g., an auxiliary attribute can include the unique identifier of another definition 500). Such links serve to package definitions 500 together, e.g., imposing a requirement that the definitions 500 be transferred together. Other examples of auxiliary attributes include conditions defining whether definitions 500 can be linked after their initial publication, e.g., by third parties such as the client applications 152.

In some examples, separate ledgers 144 (e.g., separate distributed ledgers, or separate repositories within the ledger subsystem 148) may be created for each pool of transferrable items (e.g., each individual flight, in the air travel context). Following expiry of the transferrable items for a given pool, the corresponding repository can then simply be discarded, reducing the storage requirements at the ledger subsystem 148, and/or the computational load associated with maintaining distributed ledgers.

The scope of the claims should not be limited by the embodiments set forth in the above examples, but should be given the broadest interpretation consistent with the description as a whole.

## Claims

1. A method, comprising:
maintaining, for a pool of items, an available quantity indicator;
selecting a transferrable quantity associated with the pool of items;
updating the available quantity indicator according to the transferrable quantity;
obtaining a set of unique item identifiers equal in number to the transferrable quantity;
publishing a set of transferrable item definitions equal in number to the transferrable quantity, each transferrable item definition including (i) a respective unique identifier, (ii) a cost, and (iii) an expiry time;
receiving, prior to the expiry time, a conversion request including a unique identifier from a published transferrable item definition; and
responsive to authentication of the conversion request, receiving purchaser identification data associated with the conversion request, and generating a purchase record corresponding to an item from the pool, the purchase record linking the purchaser identification data with the item.

2. The method of claim 1, wherein the items are passenger spaces on a vehicle.

3. The method of claim 1 or 2, wherein updating the available quantity indicator includes incrementing an allotment value stored in association with the pool of items according to the transferrable quantity.

4. The method according to one of the claims 1 to 3, further comprising: selecting auxiliary attributes for each unique identifier, and publishing the auxiliary attributes with respective ones of the transferrable item definitions.

5. The method according to one of the claims 1 to 4, wherein publishing the transferrable item definitions includes generating respective transaction records for each transferrable item definition, and submitting the transaction records to a distributed ledger.

6. The method according to one of the claims 1 to 5, further comprising:
prior to the publishing, generating a distributed ledger specific to the pool of items; and
following the expiry time, discarding the distributed ledger.

7. The method according to one of the claims 1 to 6, further comprising:
receiving a payment corresponding to the unique identifier, prior to the conversion request.

8. The method of claim 7, further comprising:
receiving the payment in association with a first client identifier;
receiving the conversion request from a second client identifier; and
wherein authenticating the conversion request includes verifying that the second client identifier acquired the transferrable item definition.

9. The method according to one of the claims 1 to 8, wherein obtaining the unique identifiers includes generating the unique identifiers based on a provider identifier.

10. The method according to one of the claims 1 to 9, further comprising:
detecting a change associated with the pool of items; and
generating an update notification associated with at least one of the transferrable item definitions.

11. A computing device, comprising:
a memory storing, for a pool of items, an available quantity indicator;
a communications interface; and
a processor configured to:
select a transferrable quantity associated with the pool of items;
update the available quantity indicator according to the transferrable quantity;
obtain a set of unique item identifiers equal in number to the transferrable quantity;
publish a set of transferrable item definitions equal in number to the transferrable quantity, each transferrable item definition including (i) a respective unique identifier, (ii) a cost, and (iii) an expiry time;
receive, prior to the expiry time, a conversion request including a unique identifier from a published transferrable item definition; and
responsive to authentication of the conversion request, receive purchaser identification data associated with the conversion request, and generating a purchase record corresponding to an item from the pool, the purchase record linking the purchaser identification data with the item.

12. The computing device of claim 11, wherein the items are passenger spaces on a vehicle.

13. The computing device of claim 11 or 12, wherein the processor is configured to update the available quantity indicator by incrementing an allotment value stored in association with the pool of items according to the transferrable quantity.

14. The computing device according to one of the claims 11 to 13, wherein the processor is further configured to:
select auxiliary attributes for each unique identifier, and publish the auxiliary attributes with respective ones of the transferrable item definitions.

15. The computing device according to one of the claims 11 to 14, wherein the processor is configured to publish the transferrable item definitions by generating respective transaction records for each transferrable item definition, and submitting the transaction records to a distributed ledger.
